# EUROPEAN PATENT APPLICATION

(11) **EP 4 745 861 A1**
(43) Date of publication of application: **20.05.2026**
(21) Application number: 25215105.5
(22) Date of filing: 11.11.2025
(51) Int. Cl.: G06Q 10/10, G06F 40/56, G10L 15/22, G10L 15/26, H04L 12/18

(54) **SYSTEMS AND METHODS FOR ON-DEVICE ARTIFICIAL INTELLIGENCE FOR A VIRTUAL MEETING**

(30) Priority: 15.11.2024 US 202418949832
(71) Applicant: Google LLC, Mountain View, CA 94043 (US)
(72) Inventor: APOSTOLOPOULOS, John, Mountain View, 94043 (US); WANG, Bo, Mountain View, 94043 (US)
(74) Representative: Anderson, Oliver Ben

(57) **Abstract**

A method for on-device AI during a virtual meeting includes receiving, at a first client device of a first participant of one or more participants of a virtual meeting, a request to perform a task pertaining to the virtual meeting from a second client device of a second participant of the plurality of participants; obtaining, at the first client device, first text data based on first audio data associated with a first audio stream produced by the second client device; performing, using an AI model of the first client device and using the first text data as input to the AI model, the task pertaining to the virtual meeting; and providing, by the first client device, information associated with the performed task pertaining to the virtual meeting to the second client device.

## Description

### TECHNICAL FIELD

Aspects and implementations of the present disclosure relate to virtual meetings and more specifically to systems and methods for on-device artificial intelligence for a virtual meeting.

### BACKGROUND

Virtual meetings can take place between multiple participants via a virtual meeting platform. A virtual meeting platform can include tools that allow multiple client devices to be connected over a network and share each other's audio (e.g., voice of a user recorded via a microphone of a client device) and/or video stream (e.g., a video captured by a camera of a client device, or video captured from a screen image of the client device) for efficient communication. To this end, the virtual meeting platform can provide a user interface that includes multiple regions to present the video stream of each participating client device.

### SUMMARY

The below summary is a simplified summary of the disclosure in order to provide a basic understanding of some aspects of the disclosure. This summary is not an extensive overview of the disclosure. It is intended neither to identify key or critical elements of the disclosure, nor delineate any scope of the particular implementations of the disclosure or any scope of the claims. Its sole purpose is to present some concepts of the disclosure in a simplified form as a prelude to the more detailed description that is presented later.

An aspect of the disclosure provides a method. The method includes receiving, at a first client device of a first participant of one or more participants of a virtual meeting, a request to perform a task pertaining to the virtual meeting from a second client device of a second participant of the one or more participants. The request may be received during the virtual meeting. The method includes obtaining, at the first client device, first text data based on first audio data associated with a first audio stream produced by the second client device. The method includes performing, using an artificial intelligence (AI) model of the first client device and using the first text data as input to the AI model, the task pertaining to the virtual meeting. The method includes providing, by the first client device, information associated with the performed task pertaining to the virtual meeting to the second client device.

Another aspect of the disclosure provides another method. The method includes receiving, at a first client device of a first participant of one or more participants of a virtual meeting, a request of the first participant to perform a task pertaining to the virtual meeting. The request may be received during the virtual meeting. The method includes determining, by the first client device, that the performance of the task pertaining to the virtual meeting is to be delegated to a second client device of a second participant of the one or more participants. The performance of the task pertaining to the virtual meeting may include use of an AI model. The method includes sending, by the first client device, an instruction to perform the task pertaining to the virtual meeting to the second client device. The method includes receiving, by the first client device, information associated with the performed task pertaining to the virtual meeting from the second client device. The method includes presenting the information associated with the performed task during the virtual meeting.

Another aspect of the disclosure provides another method. The method includes receiving, at a first client device of a first participant of one or more participants of a virtual meeting, a request to perform a task pertaining to the virtual meeting from a second client device of a second participant of the one or more participants. The request may be received during the virtual meeting. The method includes determining, at the first client device, that the performance of the task pertaining to the virtual meeting is to be delegated to a third client device of a third participant of the one or more participants. The performance of the task pertaining to the virtual meeting may include use of an AI model. The method includes providing, by the first client device, a second request to perform the task pertaining to the virtual meeting to the third client device. The method includes causing the second client device to receive information associated with the performance, by the third client device, of the task pertaining to the virtual meeting.

### BRIEF DESCRIPTION OF THE DRAWINGS

Aspects and implementations of the present disclosure will be understood more fully from the detailed description given below and from the accompanying drawings of various aspects and implementations of the disclosure, which, however, should not be taken to limit the disclosure to the specific aspects or implementations, but are for explanation and understanding only.
**FIG. 1** illustrates an example system architecture for on-device artificial intelligence (AI) for a virtual meeting, in accordance with some implementations of the present disclosure.
**FIG. 2** illustrates a schematic block diagram for an AI training subsystem of a virtual meeting platform, in accordance with some implementations of the present disclosure.
**FIG. 3** illustrates a schematic block diagram for an AI inference subsystem of a virtual meeting platform, in accordance with some implementations of the present disclosure.
**FIG. 4** depicts a flow diagram of a method for on-device AI for a virtual meeting, in accordance with some implementations of the present disclosure.
**FIG. 5** depicts a flow diagram of another method for on-device AI for a virtual meeting, in accordance with some implementations of the present disclosure.
**FIG. 6** depicts a flow diagram of another method for on-device AI for a virtual meeting, in accordance with some implementations of the present disclosure.
**FIG. 7** depicts a virtual meeting user interface (UI) for a virtual meeting, in accordance with some implementations of the present disclosure.
**FIG. 8** is a block diagram illustrating an example computer system, in accordance with some implementations of the present disclosure.

### DETAILED DESCRIPTION

Aspects of the present disclosure relate to on-device artificial intelligence (AI) for a virtual meeting. A virtual meeting platform can enable video-based conferences between multiple participants via respective client devices that are connected over a network and share each other's audio (e.g., voice of a user recorded via a microphone of a client device) and/or video streams (e.g., a video captured by a camera of a client device) during a virtual meeting. In some instances, a virtual meeting platform can enable a significant number of client devices (e.g., up to one hundred or more client devices) to be connected via the virtual meeting. A participant of a virtual meeting can speak to the other participants of the virtual meeting. Some existing virtual meeting platforms can provide a user interface (UI) to each client device connected to the virtual meeting, where the UI displays visual items corresponding to the video streams shared over the network in a set of regions in the UI.

In a typical virtual meeting, a server of the virtual meeting platform uses AI models to perform tasks related to a virtual meeting. This can present several disadvantages. For example, the server uses a large system infrastructure to support constantly executing the AI models, there is a potential for abuse of the server, and there is an increased use of server computing resources and server network resources to send data to and from the server. Additionally, the server cannot process data that has been encrypted by the client devices (e.g., data that should be encrypted because of privacy laws and regulations).

Implementations of the present disclosure address the above and other deficiencies by providing on-device AI capabilities for a virtual meeting. Aspects and implementations of the present disclosure include receiving, at a first client device of a first participant of a virtual meeting, a request to perform a task pertaining to the virtual meeting. The first client device may receive the request from a second client device of a second participant of the virtual meeting. The task may include, for example, generating a transcript of the virtual meeting, generating real-time captions for the virtual meeting, generating a summary of the virtual meeting, or generating notes based on the discussion during the virtual meeting. The first client device can obtain text data based on audio data associated with a first audio stream produced by the second client device. The audio data may include speech data generated by the second client device in response to the second participant speaking during the meeting. An AI model of the first client device may use the text data as input to the AI model and may perform the task pertaining to the virtual meeting. The first client device may provide information associated with the performed task to the second client device (e.g., where the task includes generating a summary of the virtual meeting, the information associated with the task may include the summary).

Some benefits of the present disclosure may provide a technical effect caused by or resulting from a technical solution to a technical problem. For example, one technical problem may relate to the use of a large amount of computing resources by a server to run an AI model to perform a task related to a virtual meeting. One of the technical solutions to the technical problem may include determining that a client device can run an AI model to perform the task related to the virtual meeting. As a consequence, the consumption of computing resources by the server is reduced or eliminated. Another technical problem includes the server not processing data that has been encrypted by a client device. A technical solution may include using client devices to decrypt the data, process the data, and re-encrypting the data such that the server does not receive the data. As a consequence, the data is not provided to the server and is secure.

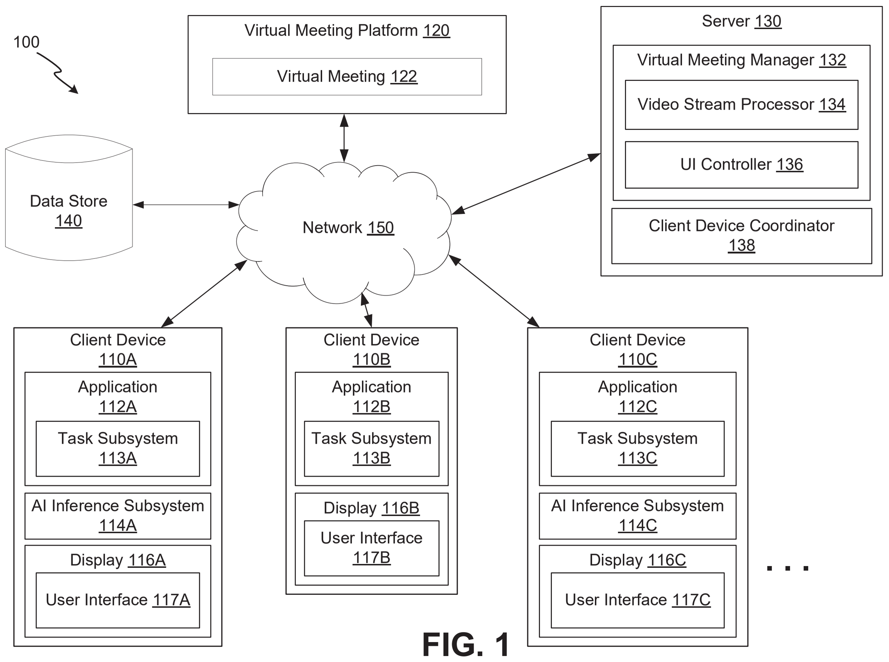

**FIG. 1** illustrates an example system architecture 100, in accordance with implementations of the present disclosure. The system architecture 100 includes one or more client devices 110A-N, a virtual meeting platform 120, a server 130, and a data store 140, each connected to a network 150.

In some implementations, the virtual meeting platform 120 enables users of one or more of the client devices 110A-N to connect with each other in a virtual meeting (e.g., a virtual meeting 122). A virtual meeting 122 refers to a real-time communication session such as a video-based call or video chat, in which participants can connect with multiple additional participants in real-time and be provided with audio and video capabilities. A virtual meeting 122 may include an audio-based call or chat, in which participants connect with multiple additional participants in real-time and are provided with audio capabilities. Real-time communication refers to the ability for users to communicate (e.g., exchange information) instantly without transmission delays and/or with negligible (e.g., milliseconds or microseconds) latency. The virtual meeting platform 120 can allow a user of the virtual meeting platform 120 to join and participate in a virtual meeting 122 with other users of the virtual meeting platform 120 (such users sometimes being referred to, herein, as "virtual meeting participants" or, simply, "participants"). Implementations of the present disclosure can be implemented with any number of participants connecting via the virtual meeting 122 (e.g., up to one hundred or more).

In implementations of the disclosure, a "user" or "participant" can be represented as a single individual. However, other implementations of the disclosure encompass a "user" being an entity controlled by a set of users or an organization and/or an automated source such as a system or a platform. In situations in which the systems discussed here collect personal information about users, or can make use of personal information, the users can be provided with an opportunity to control whether the virtual meeting platform 120 or the virtual meeting manager 132 collects user information (e.g., information about a user's social network, social actions or activities, profession, a user's preferences, or a user's current location), or to control whether or how to receive content from the virtual meeting platform 120 or the virtual meeting manager 132 that can be more relevant to the user. In addition, certain data can be treated in one or more ways before it is stored or used, so that personally identifiable information is removed. For example, a user's identity can be treated so that no personally identifiable information can be determined for the user, or a user's geographic location can be generalized where location information is obtained (such as to a city, ZIP code, or state level), so that a particular location of a user cannot be determined. Thus, the user can have control over how information is collected about the user and used by the virtual meeting platform 120 or the virtual meeting manager 132.

In some implementations, the server 130 includes a virtual meeting manager 132. The virtual meeting manager 132, in one or more implementations, is configured to manage a virtual meeting 122 between multiple users of the virtual meeting platform 120. The virtual meeting manager 132 can provide the UIs 117A-N to each client device 110A-N to enable users to watch and listen to each other during a virtual meeting 122. The virtual meeting manager 132 can also collect and provide data associated with the virtual meeting 122 to each participant of the virtual meeting 122. In some implementations, the virtual meeting manager 132 provides the UIs 117A-N for presentation by client applications 112A-N. For example, the respective UIs 117A-N can be displayed on the display devices 116A-N by the client applications 112A-N executing on the operating systems of the client devices 110A-N. In some implementations, the virtual meeting manager 132 determines visual items for presentation in the UIs 117A-N during a virtual meeting. A visual item can refer to a UI element that occupies a particular region in the UI and is dedicated to presenting a video stream from a respective client device. Such a video stream can depict, for example, a user of the respective client device 110A-N while the user is participating in the virtual meeting 122 (e.g., speaking, presenting, listening to other participants, watching other participants, etc., at particular moments during the virtual meeting 122), a physical conference or meeting room (e.g., with one or more participants present), a document or media content (e.g., video content, one or more images, etc.) being presented during the virtual meeting 122, etc.

In some implementations, the virtual meeting manager 132 includes a video stream processor 134 and a UI controller 136. Each of the video stream processor 134 or the UI controller 136 may include a software application (or a subset thereof) that performs certain virtual meeting functionality for the virtual meeting manager 132. The video stream processor 134 may be configured to receive video streams from one or more of the client devices 110AN. The video stream processor 134 may be configured to determine visual items for presentation in the UI of such client devices 110A-N (e.g., the UIs 117A-N, discussed below) during the virtual meeting 122. Each visual item can correspond to a video stream from a client device 110A-N (e.g., the video stream pertaining to one or more participants of the virtual meeting 122). In some implementations, the video stream processor 134 receives audio streams associated with the video streams from the client devices (e.g., from an audiovisual component of the client devices 110A-N). Once the video stream processor 134 has determined visual items for presentation in the UI, the video stream processor 134 can notify the UI controller 136 of the determined visual items. The visual items for presentation can be determined based on current speaker, current presenter, order of the participants joining the virtual meeting 122, list of participants (e.g., alphabetical), etc.

In some implementations, the UI controller 136 provides the UI for the virtual meeting 122 (e.g., the UI 117A-N). The UI can include multiple regions. Each region can display a visual item representing a video stream pertaining to one or more participants of the virtual meeting 122. The UI controller 136 can control which video stream is to be used by providing a command to one or more client devices 1 10A-N that indicates which video stream is to be represented in which region of the UI (along with the received video and audio streams being provided to the client devices 110A-N). For example, in response to being notified of the determined visual items for presentation in the UI 117A-N, the UI controller 136 can transmit a command causing each determined visual item to be displayed in a region of the UI and/or rearranged in the UI.

In one or more implementations, the virtual meeting manager 132 includes a client device coordinator 138. The client device coordinator 138 may include a software application (or a subset thereof) that performs certain virtual meeting functionality for the virtual meeting manager 132. The client device coordinator 138 can be configured and/or otherwise programmed to provide information to the one or more client devices 110A-N indicating the computing resources, AI capabilities, and workloads of different client devices 110A-N so that the client devices 110A-N can coordinate tasks pertaining to the virtual meeting 122 between the client devices 110A-N.

In some implementations, each of the virtual meeting platform 120 or the server 130 include one or more computing devices (such as a rackmount server, a router computer, a server computer, a personal computer, a mainframe computer, a laptop computer, a tablet computer, a desktop computer, etc.), data stores (e.g., hard disks, memories, databases), networks, software components, and/or hardware components that can be used to enable a user to connect with other users via a virtual meeting 122. The virtual meeting platform 120 can also include a website (e.g., one or more webpages) or application back-end software that can be used to enable a user to connect with other users by way of the virtual meeting 122.

In some implementations, the one or more client devices 110A-N each include one or more computing devices such as personal computers (PCs), laptops, mobile phones, smart phones, tablet computers, netbook computers, network-connected televisions, etc. The one or more client devices 110A-N can also be referred to as "user devices." Each client device 110AN can include an audiovisual component that can generate audio and video data to be streamed to the virtual meeting manager 132. The audiovisual component can include a device (e.g., a microphone) to capture an audio signal representing speech of a user and generate audio data (e.g., an audio file or audio stream) based on the captured audio signal. The audiovisual component can include another device (e.g., a speaker) to output audio data to a user associated with a particular client device 110A-N. In some implementations, the audiovisual component includes an image capture device (e.g., a camera) to capture images and generate video data (e.g., a video stream) of the captured data of the captured images.

As described previously, an audiovisual component of each client device 110A-N can capture images and generate video data (e.g., a video stream) of the captured data of the captured images. In some implementations, the client devices 110A-N transmit the generated video stream to virtual meeting manager 132. The audiovisual component of each client device 110A-N can also capture an audio signal representing speech of a user and generate audio data (e.g., an audio file or audio stream) based on the captured audio signal. In some implementations, the client devices 110A-N transmit the generated audio data to the virtual meeting manager 132.

In some implementations, each client device 110A-N includes a respective client application 112A-N, which can be a mobile application, a desktop application, a web browser, etc. The client application 112A-N can present, on a display device 116A-N of a client device 110A-N or a UI (e.g., the UI 117A-N), one or more features of the application 112A-N for participants to access the virtual meeting platform 120. For example, a participant of a first client device 110A can join and participate in the virtual meeting 122 via a UI 117A presented on the display device 116A by the application 112A. The user can present a document to participants of the virtual meeting 122 using the UI 117A. Each of the UIs 117A-N can include multiple regions to present visual items corresponding to video streams of the client devices 110A-N provided to the server 130 for the virtual meeting 122.

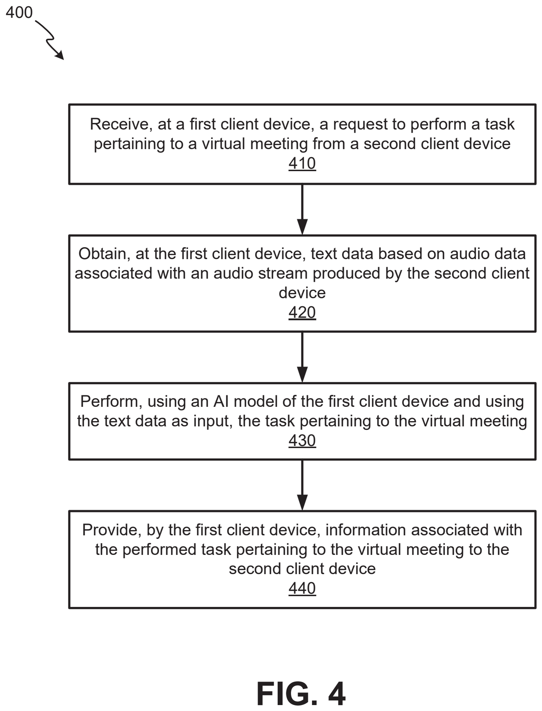

In one implementation, the application 112A-N may include a task subsystem 113A-N. The task subsystem 113A-N may include a subsystem or subcomponent of the application 112A-N. The task subsystem 113A-N can be configured and/or otherwise programmed to determine that the user of the application 112A-N is requesting that the application 112A-N (or another component of the client device 110A-N associated with the application 112A-N) perform a task pertaining to the virtual meeting 122. The task subsystem 113A-N can be further configured and/or programmed to determine if the client device 110AN is capable of performing the task, and, if not, the task subsystem 113A-N can identify another client device 110A-N capable of performing the task and send a request to that client device 110A-N to perform the task. Functionality of the task subsystem 113A-N is discussed further below in relation to **FIGS. 4-6****.**

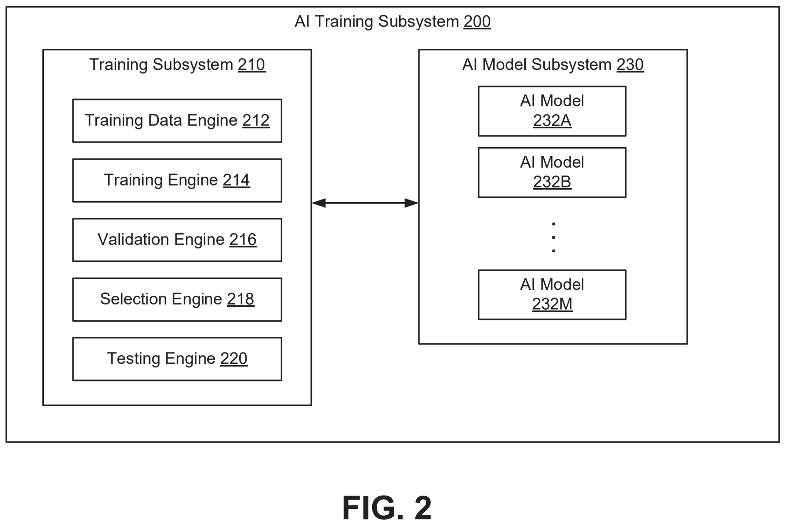

In some implementations, a client device 110A, C-N includes an AI inference subsystem 114A, C-N. The AI inference subsystem 114A, C-N may include one or more AI models configured to perform tasks pertaining to the virtual meeting 122. The task subsystem 113A, C-N may use the AI inference subsystem 114A, C-N to perform tasks pertaining to the virtual meeting 122. Functionality of the AI inference subsystem 114A, C-N is discussed further below in relation to **FIGS. 2-3****.** The AI inference subsystem 114A, C-N can be a component that is separate from the application 112A-N (as shown in **FIG. 1**), or in some implementations, the AI inference subsystem 114A, C-N is part of the application 112A-N or the task subsystem 113A-N. As also shown in **FIG. 1****,** some client devices 110A-N (such as the client device 110B) may not include an AI inference subsystem 114A, C-N.

In one or more implementations, the client device coordinator 138 is part of a client device 110A-N. In some implementations, the application 112A sends the video stream to the other client devices 110B-N and receives the video streams from the other client devices 110B-N and the applications 112A-112N can generate their respective virtual meeting UIs 117A-N or can finalize their respective UIs 117A-N, which may have been partially generated by the UI controller 136.

In some implementations, the data store 140 is a persistent storage that is capable of storing data as well as data structures to tag, organize, and index the data. A data item can include audio data and/or video stream data, in accordance with implementations described herein. The data store 140 can be hosted by one or more storage devices, such as main memory, magnetic or optical storage-based disks, tapes, hard drives, flash memory, and so forth. In some implementations, the data store 140 is a network-attached file server, while in other implementations, the data store 140 is some other type of persistent storage such as an object-oriented database, a relational database, and so forth, that can be hosted by the virtual meeting platform 120 or one or more different machines (e.g., the server 130) coupled to the virtual meeting platform 120 using the network 150. In some implementations, the data store 140 stores portions of audio and video streams received from one or more client devices 110A-N for the virtual meeting platform 120. Moreover, the data store 140 can store various types of documents, such as a slide presentation, a text document, a spreadsheet, or any suitable electronic document (e.g., an electronic document including text, tables, videos, images, graphs, slides, charts, software programming code, designs, lists, plans, blueprints, maps, etc.). These documents can be shared with users of the client devices 110A-N and/or concurrently editable by the users.

In some implementations, the network 150 includes a public network (e.g., the Internet), a private network (e.g., a local area network (LAN) or wide area network (WAN)), a wired network (e.g., Ethernet network), a wireless network (e.g., an 802.11 network or a Wi-Fi network), a cellular network (e.g., a Long Term Evolution (LTE) network), routers, hubs, switches, server computers, and/or a combination thereof.

It should be noted that in some implementations, the functions of the virtual meeting platform 120 or the server 130 are provided by a fewer number of machines. For example, in some implementations, the server 130 is integrated into a single machine, while in other implementations, the server 130 is integrated into multiple machines. In addition, in one or more implementations, the server 130 is integrated into the virtual meeting platform 120.

In general, one or more functions described in the several implementations as being performed by the virtual meeting platform 120 or server 130 can also be performed by the client devices 110A-N in other implementations, if appropriate. In addition, in some implementations, the functionality attributed to a particular component can be performed by different or multiple components operating together. The virtual meeting platform 120 or the server 130 can also be accessed as a service provided to other systems or devices through appropriate application programming interfaces, and thus is not limited to use in websites.

Although implementations of the disclosure are discussed in terms of the virtual meeting platform 120 and users of the virtual meeting platform 120 participating in a virtual meeting 122, implementations can also be generally applied to any type of telephone call, conference call, or other technological communications methods between users. Implementations of the disclosure are not limited to virtual meeting platforms that provide virtual meeting tools to users.

**FIG. 2** illustrates an example AI training subsystem 200 that can be used to train the AI model 232A-M, in accordance with implementations of the present disclosure. As illustrated in **FIG. 2****,** the AI training subsystem 200 can include a training subsystem 210, which may include a training data engine 212, a training engine 214, a validation engine 216, a selection engine 218, or a testing engine 320. The AI training subsystem 200 may include one or more AI models 232A-M.

In one implementation, an AI model 232A-M includes one or more of artificial neural networks (ANNs), decision trees, random forests, support vector machines (SVMs), clustering-based models, Bayesian networks, or other types of machine learning models. ANNs generally include a feature representation component with a classifier or regression layers that map features to a target output space. The ANN can include multiple nodes ("neurons") arranged in one or more layers, and a neuron may be connected to one or more neurons via one or more edges ("synapses"). The synapses can perpetuate a signal from one neuron to another, and a weight, bias, or other configuration of a neuron or synapse can adjust a value of the signal. Training the ANN may include adjusting the weights or other features of the ANN based on an output produced by the ANN during training.

An ANN may include, for example, a convolutional neural network (CNN), recurrent neural network (RNN), or a deep neural network. A CNN, a specific type of ANN, hosts multiple layers of convolutional filters. Pooling is performed, and non-linearities may be addressed, at lower layers, on top of which a multi-layer perceptron is commonly appended, mapping top layer features extracted by the convolutional layers to decisions (e.g., classification outputs). A deep network may include an ANN with multiple hidden layers or a shallow network with zero or a few (e.g., 1-2) hidden layers. Deep learning is a class of machine learning algorithms that use a cascade of multiple layers of nonlinear processing units for feature extraction and transformation. Each successive layer uses the output from the previous layer as input. An RNN is a type of ANN that includes a memory to enable the ANN to capture temporal dependencies. An RNN is able to learn input-output mappings that depend on both a current input and past inputs. The RNN will address past and future measurements and make predictions based on this continuous measurement information. One type of RNN that can be used is a long short term memory (LSTM) neural network.

ANNs can learn in a supervised (e.g., classification) or unsupervised (e.g., pattern analysis) manner. Some ANNs (e.g., such as deep neural networks) may include a hierarchy of layers, where the different layers learn different levels of representations that correspond to different levels of abstraction. In deep learning, each level learns to transform its input data into a slightly more abstract and composite representation.

In one implementation, an AI model 232A-M includes a generative AI model. A generative AI model can deviate from a machine learning model based on the generative AI model's ability to generate new, original data, rather than making predictions based on existing data patterns. A generative AI model can include a generative adversarial network (GAN), a variational autoencoder (VAE), a large language model (LLM), or a diffusion model. In some instances, a generative AI model can employ a different approach to training or learning the underlying probability distribution of training data, compared to some machine learning models. For instance, a GAN can include a generator network and a discriminator network. The generator network attempts to produce synthetic data samples that are indistinguishable from real data, while the discriminator network seeks to correctly classify between real and fake samples. Through this iterative adversarial process, the generator network can gradually improve its ability to generate increasingly realistic and diverse data.

Generative AI models also have the ability to capture and learn complex, high-dimensional structures of data. One aim of generative AI models is to model underlying data distribution, allowing them to generate new data points that possess the same characteristics as training data. Some machine learning models (e.g., that are not generative AI models) focus on optimizing specific prediction of tasks.

In some implementations, an AI model 232A-M is an AI model that has been trained on a corpus of data. For example, the AI model 232A-M can be an AI model that is first pre-trained on a corpus of data to create a foundational model, and afterwards fine-tuned on more data pertaining to a particular set of tasks to create a more task-specific, or targeted, model. The foundational model can first be pre-trained using a corpus of data that can include data in the public domain, licensed content, and/or proprietary content. Such a pre-training can be used by the AI model 232A-M to learn broad elements including, image or speech recognition, general sentence structure, common phrases, vocabulary, natural language structure, and other elements. In some implementations, this first foundational model is trained using self-supervision, or unsupervised training on such datasets.

In some implementations, the second portion of training, including fine-tuning, includes unsupervised, supervised, reinforced, or any other type of training. In some implementations, this second portion of training includes some elements of supervision, including learning techniques incorporating human or machine-generated feedback, undergoing training according to a set of guidelines, or training on a previously labeled set of data, etc. In a non-limiting example associated with reinforcement learning, the outputs of the AI model 232A-M while training may be ranked by a user, according to a variety of factors, including accuracy, helpfulness, veracity, acceptability, or any other metric useful in the fine-tuning portion of training. In this manner, the AI model 232A-M can learn to favor these and any other factors relevant to users when generating a response. Further details regarding training are provided below.

In some implementations, an AI model 232A-M includes one or more pre-trained models, or fine-tuned models. In a non-limiting example, in some implementations, the goal of the "fine-tuning" can be accomplished with a second, or third, or any number of additional models. For example, the outputs of the pre-trained model may be input into a second AI model that has been trained in a similar manner as the "fine-tuned" portion of training above. In such a way, two more AI models may accomplish work similar to one model that has been pre-trained, and then fine-tuned.

As indicated above, an AI model 232A-M may be one or more generative AI models, allowing for the generation of new and original content. In one implementation, a generative AI model includes a diffusion model. A diffusion model may include a deep generative model that can be used to generate images, edit existing images, and create new image styles. The diffusion model may have been trained by iteratively applying a diffusion process to an input image, which may include gradually adding noise to the image until it becomes unrecognizable. The diffusion model then learns to reverse this process, starting from the noisy image and gradually denoising it until it becomes a recognizable image. In some implementations, the diffusion model may have been trained on multiple virtual meeting backgrounds by using different virtual meeting backgrounds as input images during the training process.

In one implementation, the training subsystem 210 manages the training and testing of an AI model 232A-M. The training data engine 212 can generate training data (e.g., a set of training inputs such as noisy virtual meeting background images and a set of target outputs such as respective denoised virtual meeting background images) to train an AI model 232AM. In an illustrative example, the training data engine 212 can initialize a training set *T* to null (e.g., {}). The training data engine 212 can add the training data to the training set *T* and can determine whether training set *T* is sufficient for training a AI model 232A-M. The training set *T* can be sufficient for training the AI model 232A-M if the training set *T* includes a threshold amount of training data, in some implementations. In response to determining that the training set *T* is not sufficient for training, the training data engine 212 can identify additional data to use as training data. In response to determining that the training set *T* is sufficient for training, the training data engine 212 can provide the training set *T* to the training engine 214.

The training engine 214 can train an AI model 232A-M using the training data (e.g., training set T). The AI model 232A-M may refer to the model artifact that is created by the training engine 214 using the training data, where such training data can include training inputs and, in some implementations, corresponding target outputs. The training engine 214 can input the training data into the AI model 232A-M so that the AI model 232A-M can find patterns in the training data and configure itself based on those patterns.

Where the AI model 232A-M uses supervised learning, the training engine 214 can assist the AI model 232A-M in determining whether the AI model 232A-M maps the training input to the target output. Where the AI model 232A-M uses unsupervised learning, the training engine 214 can input the training data into the AI model 232A-M The AI model 232A-M can configure itself based on the input training data, but since the training data may not include a target output, the training engine 214 may not assist the AI model 232A-M in determining whether the AI model 232A-M provided a correct output during the training process.

The validation engine 216 may be capable of validating a trained AI model 232AM using a corresponding set of features of a validation set from the training data engine 212. The validation engine 216 can determine an accuracy of each of the trained AI models 232AM based on the corresponding sets of features of the validation set. Where the training data may not include a target output, validating a trained AI model 232A-M may include obtaining an output from the AI model 232A-M and providing the output to another entity for evaluation. The other entity may include another AI model configured to evaluate the output of the AI model 232A-M that is undergoing training. The other entity may include a human. The validation engine 216 can discard a trained AI model 232A-M that has an accuracy that does not meet a threshold accuracy or that otherwise fails evaluation. In some implementations, the selection engine 218 is capable of selecting a trained AI model 232A-M that has an accuracy that meets a threshold accuracy. In some implementations, the selection engine 218 may be capable of selecting the trained AI model 232A-M that has the highest accuracy of multiple trained AI models 232A-M. In some implementations, the selection engine 218 receives input from another AI model or a human and can select a trained AI model 232A-M based on the input.

The testing engine 220 may be capable of testing a trained AI model 232A-M using a corresponding set of features of a testing set from the training data engine 212. For example, a first trained AI model 232A that was trained using a first set of features of the training set may be tested using the first set of features of the testing set. The testing engine 320 can determine a trained AI model 232A-M that has the highest accuracy or other evaluation of all of the trained AI models 232A-M based on the testing sets.

In one implementation, the training engine 214 trains an AI model 232A. The training data engine 212 can generate training data that includes images of virtual meeting backgrounds, and the training engine 214 can cause the AI model 232A to undergo a diffusion model training process using the training data. The AI model 232A can undergo a validation and testing process using the validation engine 216 and testing engine 320.

In some implementations, the AI training subsystem 200 is part of the virtual meeting platform 120, the server 130, or the virtual meeting manager 132. Alternatively, the AI training subsystem 200 may be part of the client device 110A-N. The AI training subsystem 200 may be part of another server, system, sub-system, or it may be an independent system. In some implementations, the AI training subsystem 200 provides the trained one or more AI models 232A-M to the AI inference subsystem 114A, C-N.

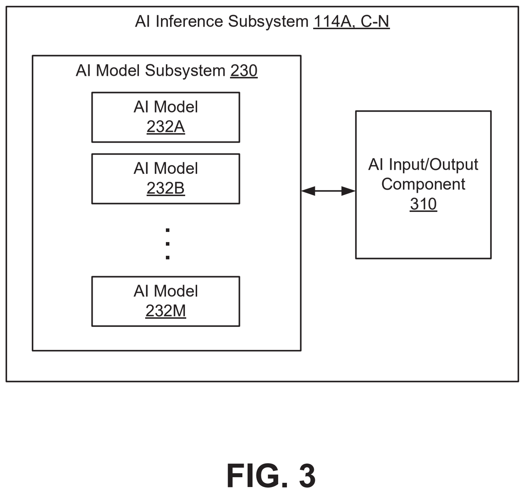

As indicated above, in some embodiments, the AI model 232A-M can include an LLM. In some embodiments, the LLM can include generative AI functionality. In such embodiments, the AI model 232A-M can generate new content based on provided input data. The generative AI model 232A-M can be supported by a prompt subsystem (not shown), which may reside on the client device 110A-N. The prompt subsystem may enable the AI inference subsystem 114A, C-N to access the generative AI model 232A-M. The prompt subsystem may be configured to perform automated identification of, and facilitate retrieval of, relevant and timely contextual information for efficient and accurate processing of prompts by the AI model 232A-M. Using the network 150 (or another network), the prompt subsystem may be in communication with one or more of the virtual meeting platform 120, the server 130, the data store 140, or a client device 110A-N. Communications between the prompt subsystem and the AI input/output component 310 (discussed below in relation to **FIG. 3**) may be facilitated by a generative model application programming interface (API), in some embodiments. Communications between the prompt subsystem and one or more of the virtual meeting platform 120, the server 130, the data store 140, or a client device 110A-N may be facilitated by a data management API. In additional or alternative embodiments, the generative model API can translate prompts generated by the prompt subsystem into unstructured natural-language format and, conversely, translate responses received from the AI model 232A-M into any suitable form (e.g., including any structured proprietary format as may be used by the prompt subsystem). Similarly, the data management API can support instructions that may be used to communicate data requests to one or more of the virtual meeting platform 120, the server 130, the data store 140, or a client device 110A-N and formats of data received from such components.

In some embodiments, the prompt subsystem can include a prompt analyzer to support various operations of this disclosure. For example, the prompt analyzer may receive an input (e.g., a prompt submitted by the AI inference subsystem 114A, C-N) and generate one or more intermediate prompts to the generative AI model 232A-M to determine what type of data the generative AI model 232A-M may need to successfully respond to the input. Upon receiving a response from the generative AI model 232A-M, the prompt analyzer may analyze the response, form a request for relevant contextual data for the data store 140, which may then supply such data. The prompt analyzer may then generate a prompt to the generative AI model 232A-M that includes the original prompt and the contextual data. In some embodiments, the prompt analyzer may, itself, include a lightweight generative AI model that may process the intermediate prompt(s) and determine what type of contextual data may be needed by the generative AI model 232A-M together with the original prompt to ensure a meaningful response from generative AI model 232A-M.

The prompt subsystem may include (or may have access to) instructions stored on one or more tangible, machine-readable storage media of a computing device (e.g., a client device 110A-N) and executable by one or more processing devices of the computing device. In one embodiment, the prompt subsystem may be implemented on a single machine. In some embodiments, the prompt subsystem may be a combination of a client component and a server component. In some embodiments the prompt subsystem may be executed entirely on a client device 110A-N. Alternatively, some portion of the prompt subsystem may be executed on a client computing device while another portion of the query tool may be executed on a server machine.

**FIG. 3** illustrates an example AI inference subsystem 114A, C-N that the task subsystem 113A-N may use to perform one or more operations, in accordance with implementations of the present disclosure. The AI inference subsystem 114A, C-N may include an AI model subsystem 230, which may include one or more AI models 232A-M. The one or more AI models 232A-M may include one or more of the AI models 232A-M trained by the AI training subsystem 200.

In some implementations, the AI inference subsystem 114A, C-N includes an AI input/output component 310. The AI input/output component 310 can be configured to feed data as input to an AI model 232A-M. The AI input/output component 310 can be configured to obtain one or more outputs from the one or more AI models 232A-M and provide the one or more outputs to the task subsystem 113A-N.

**FIG. 4** is a flowchart illustrating one embodiment of a method 400 for on-device AI for a virtual meeting 122, in accordance with some implementations of the present disclosure. A processing device, having one or more central processing units (CPU(s)), one or more graphics processing units (GPU(s)), and/or memory devices communicatively coupled to the one or more CPU(s) and/or GPU(s) can perform the method 400 and/or one or more of the method's 400 individual functions, routines, subroutines, or operations. In certain implementations, a single processing thread can perform the method 400. Alternatively, two or more processing threads can perform the method 400, each thread executing one or more individual functions, routines, subroutines, or operations of the method. In an illustrative example, the processing threads implementing the method 400 can be synchronized (e.g., using semaphores, critical sections, and/or other thread synchronization mechanisms). Alternatively, the processing threads implementing the method 400 can be executed asynchronously with respect to each other. Various operations of the method 400 can be performed in a different (e.g., reversed) order compared with the order shown in **FIG. 4****.** Some operations of the method 400 can be performed concurrently with other operations. Some operations can be optional. In some implementations, the task subsystem 113A-N performs one or more of the operations of the method 400. As will be appreciated, performance of the operations depicted in **FIG. 4** may be caused by execution of computer-readable instructions of a computer program product.

At block 410, processing logic receives, at a first client device 110A of a first participant of one or more participants of a virtual meeting 122, a request to perform a task pertaining to the virtual meeting 122. The request to perform the task may be received from a second client device 110B of a second participant of the one or more participants. The request may be received during the virtual meeting 122.

In one implementation, each of the first client device 110A and the second client device 110B includes a respective personal computing device of the first participant or the second participant. In some implementations, responsive to joining the virtual meeting 122, the application 112A-N of a client device 110A-N may send data indicating the AI capabilities of the client device 110A-N to the client device coordinator 138. The data indicating the AI capabilities of the client device 110A-N may include data indicating that the client device 110A-N includes an AI inference subsystem 114A, C-N. The data indicating the AI capabilities of the client device 1 10A-N may include one or more technical specifications of the computing resources of the client device 110A-N (e.g., processing device capacity, memory capacity, storage capacity, types of AI models 232A-M of the AI inference subsystem 114A, C-N, etc.). The data indicating the AI capabilities of the client device 110A-N may include a workload metric for the client device 110A-N, which may include data indicating a current availability of computing resources, AI models 232A-M, or other resources of the client device 110A-N. The application 112A-N may continuously and periodically send the data indicating the AI capabilities of the client device 110A-N to the client device coordinator 138 during the virtual meeting 122. The client device coordinator 138 may continuously and periodically send the data indicating the AI capabilities of the client device 110A-N to the other client devices 110AN connected to the virtual meeting 122.

In some implementations, the second client device 110B may select the first client device 110A to perform the task based on the first client device 110A belonging to the host participant of the virtual meeting 122. The host participant may include the participant that organized the virtual meeting 122. The second client device 110B may select the first client device 110A to perform the task based on the AI capabilities of the first client device 110A.

At block 420, processing logic obtains, at the first client device 110A, first text data based on first audio data associated with a first audio stream produced by the second client device 110B. The first client device 110A may use the first text data to perform the task pertaining to the virtual meeting 122.

In one implementation, obtaining the first text data may include receiving, at the first client device 110A, the first audio data from the second client device 110B and generating, using a speech-to-text AI model 232A-M of the first client device 110A and using the first audio data as input to the speech-to-text AI model, the first text data. In some implementations, obtaining the first text data includes receiving, at the first client device 110A, the first text data generated by the second client device 110B.

At block 430, processing logic performs, using an AI model 232A-M of the first client device 110A and using the first text data as input to the AI model 232A-M, the task pertaining to the virtual meeting 122. In one implementation, the task pertaining to the virtual meeting 122 includes generating a transcript of the virtual meeting 122 or captions for the virtual meeting 122. The transcript or captions of the virtual meeting 122 may include a text version of at least a portion of the discussion during the virtual meeting 122. Generating the transcript or captions may include the task subsystem 113A-N including the first text data in the transcript or captions after generating the first text data using a speech-to-text AI model 232A-M. Generating the transcript or captions may include the task subsystem 113A-N obtaining text data based on audio data received from other client devices 1 10A-N and ordering the text data in a chronological order. The audio data and/or the text data may include metadata indicating a time at which the audio data was generated, which the task subsystem 113A-N may use to order the text data in the transcript or real-time captions. The task subsystem 113AN may continuously and periodically provide a current version of the transcript or captions to the other applications 112A-N so the applications have access to the transcript or captions during the virtual meeting 122.

In some implementations, the task pertaining to the virtual meeting 122 includes generating a summary of the virtual meeting. Generating a summary of the virtual meeting 122 may include the task subsystem 113A-N using a generative AI model 232A-M to generate a summary based on the first text data. The generative AI model 232A-M may generate the summary further based on a portion of the transcript or the captions of the virtual meeting 122. Using the generative AI model 232A-M to generate the summary may include generating a prompt that includes the first text data and/or other text data included in a portion of the transcript or captions of the virtual meeting 122, and the prompt may further include a command to summarize the first text data and/or the portion of the transcript or captions.

In one or more implementations, the task pertaining to the virtual meeting 122 includes generating one or more notes based on a discussion during the virtual meeting 122. Generating notes based on the discussion of the virtual meeting 122 may include the task subsystem 113A-N using a generative AI model 232A-M to generate the notes based on the first text data. The generative AI model 232A-M may generate the notes further based on a portion of the transcript or captions of the virtual meeting 122. Using the generative AI model 232A-M to generate the notes may include generating a prompt that includes the first text data and/or other text data included in a portion of the transcript or captions of the virtual meeting 122, and the prompt may further include a command to generate notes based on the first text data and/or the portion of the transcript or captions.

In one implementation, the task pertaining to the virtual meeting 122 includes identification of an action item discussed during the virtual meeting 122. Identifying an action item based on the discussion of the virtual meeting 122 may include the task subsystem 113AN using a generative AI model 232A-M to identify an action item based on the first text data. The generative AI model 232A-M can identify the action item further based on a portion of the transcript or captions of the virtual meeting 122. Using the generative AI model 232A-M to identify the action item may include generating a prompt that includes the first text data and/or the portion of the transcript or captions, and the prompt may further include a command to identify one or more action items based on the first text data and/or portion of the transcript captions.

In some implementations, the task pertaining to the virtual meeting 122 includes linking a portion of the transcript or captions to a corresponding portion of audio or video data. The task pertaining to the virtual meeting 122 may include generating a generative AI video that includes the participants of the virtual meeting 122 appearing together with a synthetic background. The task pertaining to the virtual meeting 122 may include other tasks that use a generative AI model to perform.

At block 440, processing logic provides, by the first client device 110A, information associated with the performed task pertaining to the virtual meeting 122 to the second client device 110B. In one implementation, the information associated with the performed task may include data generated by an AI model 232A-M as part of performing the task. For example, where the task includes generating a transcript or captions of the virtual meeting 122, the information associated with the performed task may include the transcript or captions. Where the task includes generating a summary of the virtual meeting 122, the information associated with the performed data may include the summary. Where the task includes generating one or more notes based on the discussion of the virtual meeting 122, the information associated with the performed task may include the one or more notes. Where the task includes identifying an action item discussed during the virtual meeting 122, the information associated with the performed task may include one or more identified action items.

In one or more implementations, the first client device 110A may make the information associated with the performed task (e.g., the transcript of the virtual meeting 122, the captions, the summary of the virtual meeting 122, etc.) available to one or more users of the client devices 1 10A-N. For example, where the performed task includes generating captions for the virtual meeting 122, the task subsystem 113A of the first client device 110A may provide the generated captions to the other client devices 110B-N so the other client devices 110B-N can present the captions on the respective UIs 117B-N of the client devices 110B-N. The task subsystem 113A may provide the information associated with the performed task to the users (e.g., via email), or the task subsystem 113A may provide the information associated with the performed task to a location accessible to the one or more client devices 110A-N (e.g., a shared document repository of a cloud document storage platform). Information associated with performed tasks performed by other client devices 110C-N may be aggregated at the location accessible to the one or more client devices 110A-N.

In some implementations, the task subsystem 113A of the first client device 110A may use the first audio data (discussed above in relation to block 420) to determine an emotion associated with the first audio data. In one or more implementations, the task subsystem 113A may use video data, image data, or documents to determine the emotion. The video data may include the video stream generated by a client device 110A-N and sent to the video stream processor 134. The image data may include an image captured by a client device 110A-N of the user of the client device 110A-N. The task subsystem 113A may use document data to determine the emotion. The document data may include a document included as an attachment to the calendar invite associated with the virtual meeting 122 or a document associated with a user of a client device 110A-N stored in a document cloud storage.

In one implementation, the emotion may include an emotion exhibited by the user speaking in the first audio data. The task subsystem 113A of the first client device 110A may obtain the first audio data, video data, image data, and/or document data and may generate, using AI model 232A-M and using the first audio data video data, image data, and/or document data as input to the AI model 232A-M, an output indicating an emotion pertaining to the first audio data. The AI model 232A-M may include an AI model trained to determine an emotion pertaining to input audio data, video data, image data, and/or document data. As part of block 430, performing the task pertaining to the virtual meeting 122 may further include using the output indicating the emotion pertaining to the first audio data as further input to the AI model 232A-M that performs the task pertaining to the virtual meeting 122. For example, where the task includes generating a transcript or captions of the virtual meeting 122, the AI model 232AM may include, as part of the generated transcript or captions, text indicating that the participant of the second client device 110B said the first text data with the emotion (e.g., "Second Participant: [sternly] I think we should move on to the next topic up for discussion.'").

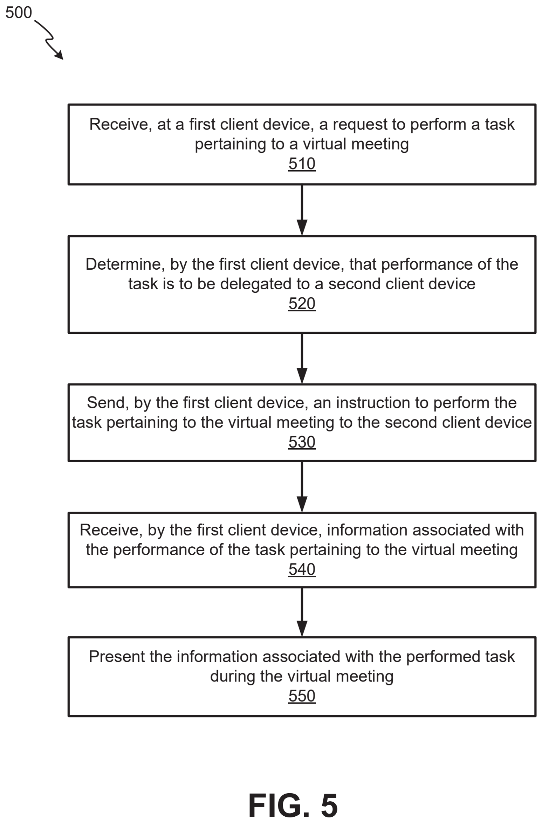

**FIG. 5** is a flowchart illustrating one embodiment of a method 500 for on-device AI for a virtual meeting 122, in accordance with some implementations of the present disclosure. A processing device, having one or more CPU(s), one or more GPU(s), and/or memory devices communicatively coupled to the one or more CPU(s) and/or GPU(s) can perform the method 500 and/or one or more of the method's 500 individual functions, routines, subroutines, or operations. In certain implementations, a single processing thread can perform the method 500. Alternatively, two or more processing threads can perform the method 500, each thread executing one or more individual functions, routines, subroutines, or operations of the method. In an illustrative example, the processing threads implementing the method 500 can be synchronized (e.g., using semaphores, critical sections, and/or other thread synchronization mechanisms). Alternatively, the processing threads implementing the method 500 can be executed asynchronously with respect to each other. Various operations of the method 500 can be performed in a different (e.g., reversed) order compared with the order shown in **FIG. 5****.** Some operations of the method 500 can be performed concurrently with other operations. Some operations can be optional. In some implementations, the task subsystem 113A-N performs one or more of the operations of the method 500. As will be appreciated, performance of the operations depicted in **FIG. 5** may be caused by execution of computer-readable instructions of a computer program product.

At block 510, processing logic receives, at a first client device 110B of a first participant of one or more participants of a virtual meeting 122, a request of the first participant to perform a task pertaining to the virtual meeting 122. The request may be received during the virtual meeting 122. In one implementation, the task subsystem 113B of the first client device 110B may obtain the request to perform the task from the application 112B. The application 112B may send the request in response to the first participant interacting with a UI element of the UI 117B. The UI element may include a button configured to cause the application 112B to send the request. The UI element may include a button labeled, for example, "Generate Meeting Transcript," "Generate Meeting Captions," "Generate Meeting Summary," etc.

At block 520, processing logic determines, by the first client device 110B, that performance of the task pertaining to the virtual meeting 122 is to be delegated to a second client device 110A of a second participant of the one or more participants. The performance of the task pertaining to the virtual meeting 122 may include the use of an AI model 232A-M.

In one implementation, determining that performance of the task pertaining to the virtual meeting 122 is to be delegated to the second client device 110A includes determining that the first client device 110B does not meet a client device criterion. The client device criterion may include the first client device 110B meeting a predetermined computing resources specification. The predetermined computing resources specification may include the first client device 110B having a processing device with at least a predetermined processor speed, the first client device 110B having memory of at least a predetermined size, the first client device 110B having data storage of at least a predetermined size, or some other predetermined computing resources specification.

In one implementation, the client device criterion includes the first client device 110B including a generative AI model 232A-M usable to perform the task pertaining to the virtual meeting 122. For example, as shown in **FIG. 1****,** the first client device 110B does not include an AI inference subsystem. Thus, the first client device 110B may not include a generative AI model 232A-M that the first client device 110B can use to perform the task.

In some implementations, the client device criterion includes a workload metric for the first client device 110B being below a threshold workload amount. The workload metric may include data indicating a current availability of computing resources, AI models 232A-M, a current network connection quality, or other resources of the first client device 110B.

In one implementation, the client device criterion includes the availability of the first client 110B being above a threshold availability. The availability of the first client device 110B may include an amount of time or a time period that the first client device 110B is predicted to be connected to the virtual meeting 122. The availability of the first client device 110B may be indicated by a calendar invite associated with the virtual meeting 122, a reply to the calendar invite 122, or by other data indicating the availability of the first client device 110B.

In some implementations, the first client device 110B may identify the second client device 110A as the client device 110 to which the task is to be delegated based on the second client device 110A meeting a client device criterion. The first client device 110B may obtain data indicating the computing resources, AI capabilities, or workload metric from the client device coordinator 138.

At block 530, processing logic sends, by the first client device 110B, an instruction to perform the task pertaining to the virtual meeting to the second client device 110A. The instruction to perform the task may include data identifying the task. The instruction to perform the task may include the first text data and/or the first audio data, as discussed above in relation to block 420 of **FIG. 4****.** The second client device 110A may use the instruction and/or the first text data and/or the first audio data to perform the task. The second client device 110A may perform the task as discussed above in relation to block 410-440 of **FIG. 4****.**

At block 540, processing logic receives, by the first client device 110B, information associated with the performed task pertaining to the virtual meeting 122 from the second client device 11A. For example, as discussed above, the information associated with the performed task may include a result of the task. The result of the task may include a transcript of the virtual meeting 122, captions for the virtual meeting 122, a summary of the virtual meeting 122, etc.

At block 550, processing logic presents the information associated with the performed task during the virtual meeting 122. Presenting the information associated with the performed task may include presenting the information on the UI 117B of the application 112B of the first client device 110B.

In one implementation, the task subsystem 113B of the first client device 110B obtains, first audio data associated with a first audio stream produced by the first client device 110B. The first audio stream may include the audio stream produced by the first client device 110B that is sent to the video stream processor 134, as discussed above in relation to **FIG. 1****.** The task subsystem 113B may generate, using a speech-to-text AI model of the first client device 110B and using the first audio data as input to the speech-to-text AI model, first text data. In some implementations, the first client device 110B may have a speech-to-text AI model but may not include other types of AI models (e.g., generative AI models) available to perform tasks pertaining to the virtual meeting 122. The speech-to-text AI model may be a lightweight AI model. The task subsystem 113B may include the first text data with the instruction to perform the task pertaining to the virtual meeting. Performance of the task pertaining to the virtual meeting 122 may include the AI model 232A-M of the second client device 110A using the first text data as input.

In some implementations, processing logic trains the speech-to-text AI model on training data based on speech of the first participant. The training data may include audio data that includes speech of the first participant and a target output that includes a text version of the speech. The first participant may cause the training of the speech-to-text AI model during a configuration or setup process for the application 112B. The speech-to-text AI model being trained on training data based on speech of the first participant may improve the accuracy of the speech-to-text AI model. Training the speech-to-text AI model on the training data based on speech of the first participant may include fine-tuning an already trained speech-to-text AI model.

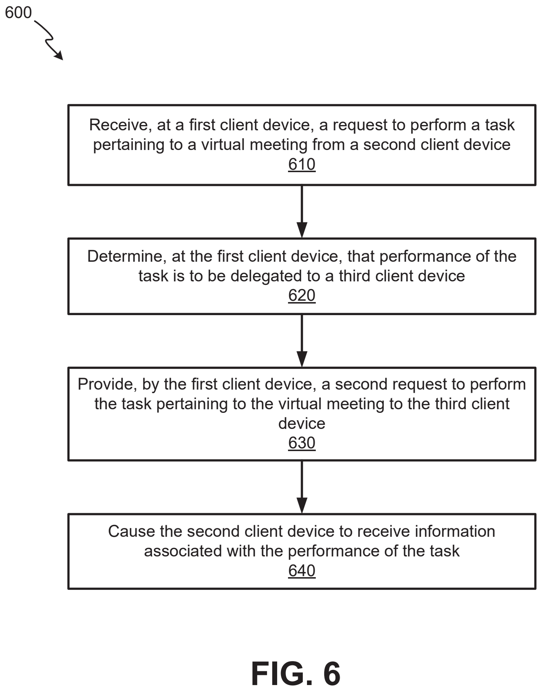

**FIG. 6** is a flowchart illustrating one embodiment of a method 600 for on-device AI for a virtual meeting 122, in accordance with some implementations of the present disclosure. A processing device, having one or more CPU(s), one or more GPU(s), and/or memory devices communicatively coupled to the one or more CPU(s) and/or GPU(s) can perform the method 600 and/or one or more of the method's 600 individual functions, routines, subroutines, or operations. In certain implementations, a single processing thread can perform the method 600. Alternatively, two or more processing threads can perform the method 600, each thread executing one or more individual functions, routines, subroutines, or operations of the method. In an illustrative example, the processing threads implementing the method 600 can be synchronized (e.g., using semaphores, critical sections, and/or other thread synchronization mechanisms). Alternatively, the processing threads implementing the method 600 can be executed asynchronously with respect to each other. Various operations of the method 600 can be performed in a different (e.g., reversed) order compared with the order shown in **FIG. 6****.** Some operations of the method 600 can be performed concurrently with other operations. Some operations can be optional. In some implementations, the task subsystem 113A-N performs one or more of the operations of the method 600. As will be appreciated, performance of the operations depicted in **FIG. 6** may be caused by execution of computer-readable instructions of a computer program product.

At block 610, processing logic receives, at a first client device 110A of a first participant of one or more participants of a virtual meeting 122, a request to perform a task pertaining to the virtual meeting from a second client device 110B of a second participant of the one or more participants. The request may be received during the virtual meeting 122. Block 610 may include functionality similar to the functionality of block 410 of the method 400.

At block 620, processing logic determines, at the first client device 110A, that performance of the task pertaining to the virtual meeting 122 is to be delegated to a third client device 110C of a third participant of the one or more participants. The performance of the task pertaining to the virtual meeting 122 may include use of an AI model 232A-M.

In one implementation, determining that the performance of the task pertaining to the virtual meeting 122 is to be delegated to the third client device 110C includes the task subsystem 113A of the first client device 110A determining that the third client device 110C meets a client device criterion. The client device criterion may include the third client device 110C meeting a predetermined computing resources specification. The client device criterion may include the third client device 110C including a generative AI model 232A-M usable to perform the task pertaining to the virtual meeting 122.

In some implementations, the client device criterion includes a workload metric for the third client device 110C being below a threshold workload amount. The workload metric of the third client device 110C may indicate a workload for the third client device 110C and may include a current availability of computing resources, AI models 232A-M, or other resources of the third client device 110C. The first client device 110A may monitor a respective workload metric for the one or more client devices 1 10A-N. For example, the first client device 110A may receive data indicating the workload metrics of the one or more client devices 110AN from the client device coordinator 138.

In some implementations, determining that the performance of the task pertaining to the virtual meeting 122 is to be delegated to the third client device 110C includes the task subsystem 113A of the first client device 110A determining that the first client device 110A does not meet a client device criterion. For example, the first client device 110A may initially meet the client device criterion and may perform a portion of the task. At a later time, the task subsystem 113A may determine that the first client device 110A no longer meets the client device criterion. The first client device 110A may no longer meet the client device criterion because the battery level of the first client device 110A is below a threshold level or because the computing resources of the first computing device 110A is below a threshold computing resources level (e.g., because the first client device 110A initialized a separate application that is using the computing resources). The first client device1 10A may not meet the client device criterion because the first client device 110A is expected to leave the virtual meeting 122 (as indicated by a calendar invite associated with the virtual meeting 122).

At block 630, processing logic provides, by the first client device 110A, a second request to perform the task pertaining to the virtual meeting 122 to the third client device 110C. The second request may include an instruction to perform the task. The second request may include data used to perform the task. For example, the data used to perform the task may include first text data or first audio data provided by the second client device 110B, as discussed above in relation to block 420 of the method 400.

At block 640, processing logic causes the second client device 110B to receive information associated with the performance of the task pertaining to the virtual meeting 122 by the third client device 110C. Responsive to the third client device 110C performing the task, the third client device 110C may send responsive data to the first client device 110A or to the second client device 110B. The responsive data may include a result of performing the task. As discussed above, the result of the task may include a transcript of the virtual meeting 122, captions for the virtual meeting 122, a summary of the virtual meeting 122, notes based on the discussion during the virtual meeting 122, or the like.

In some implementations, the participant of the second client device 110B may be unaware that the second client device 110B does not perform the task pertaining to the virtual meeting 122 and may be further unaware that the task is performed by another client device 110A or 110C.

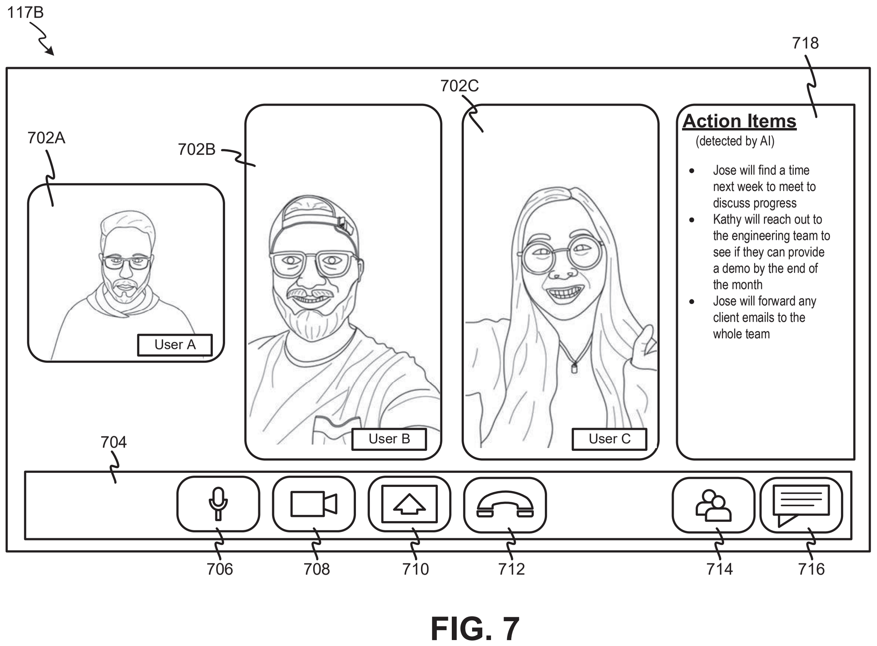

**FIG. 7** depicts a virtual meeting UI 117B for a virtual meeting 122, in accordance with some implementations of the present disclosure. The virtual meeting UI 117B may include the UI 117B displayed on the client device 110B (the client device that sends the request to perform a task pertaining to the virtual meeting 122 to the client device 110A). The virtual meeting UI 117B may include one or more regions 702A-C corresponding to a visual item of the virtual meeting 122, such as a video stream provided by a client device 110A-N of a participant of the virtual meeting 122. The virtual meeting UI 117B can include a toolbar 704 that includes one or more UI elements configured to perform virtual meeting operations. For example, as seen in **FIG. 7****,** the toolbar 704 includes an audio control button 706 used to mute and unmute a participant's audio stream, a camera control button 708 used to mute and unmute a participant's video stream, a screen share button 710 used to share the participant's client device's 110B screen with other participants of the virtual meeting 122, and a disconnect button 712 used to leave or disconnect from the virtual meeting 122. The toolbar 704 may include a participants button 714 that can display a list of the one or more participants of the virtual meeting 122. The toolbar 704 may include a chat button 716 that can display a chat interface that allows participants of the virtual meeting 122 to send and receive chat messages in the virtual meeting 122.

The UI 117B may include a task result UI element 718. The task result UI element 718 may include a visual item that presents a result of a task pertaining to the virtual meeting 122. The task may have been performed by the client device 110A (as discussed above in relation to **FIG. 4** or **FIG. 5**) or by the third client device 110C (as discussed above in relation to **FIG. 6**). For example, as seen in the example of **FIG. 7****,** the task pertaining to the virtual meeting 122 may include identifying one or more action items discussed during the virtual meeting 122, and during the virtual meeting 122, the task result UI element 718 may present text indicating the identified one or more action items.

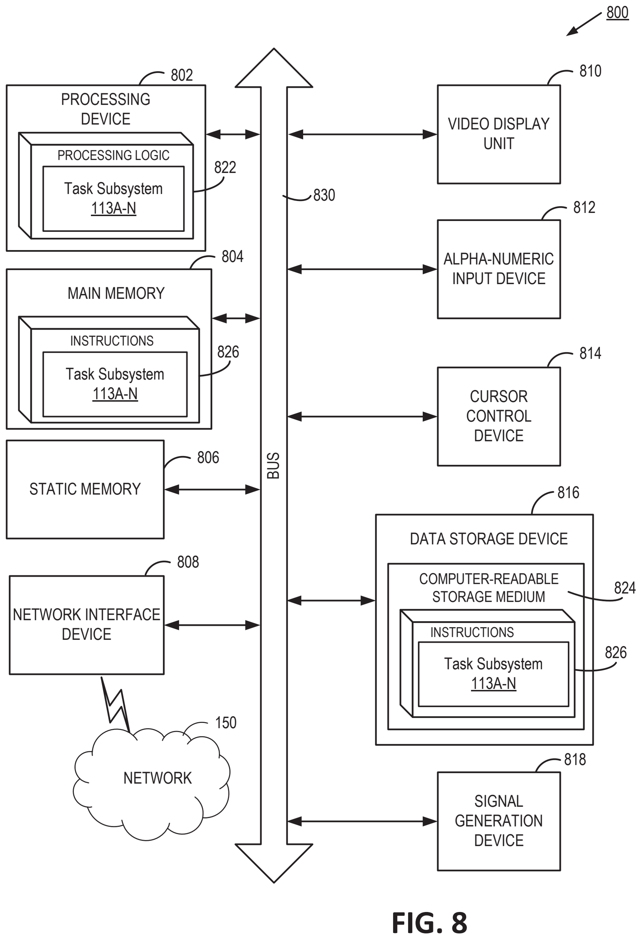

**FIG. 8** is a block diagram illustrating an example computer system, in accordance with implementations of the present disclosure. The computer system 800 can include a client device 110A-N, the virtual meeting platform 120, or the server 130 in **FIG. 1****.** The machine can operate in the capacity of a server or an endpoint machine, in an endpoint-server network environment, or as a peer machine in a peer-to-peer (or distributed) network environment. The machine can be a television, a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 800 includes a processing device (processor) 802, a main memory 804 (e.g., read-only memory (ROM), flash memory, dynamic random access memory (DRAM) such as synchronous DRAM (SDRAM), double data rate (DDR SDRAM), or DRAM (RDRAM), etc.), a static memory 806 (e.g., flash memory, static random access memory (SRAM), etc.), and a data storage device 816, which communicate with each other via a bus 830.

The processing device 802 represents one or more general-purpose processing devices such as a microprocessor, central processing unit, or the like. More particularly, the processing device 802 can be a complex instruction set computing (CISC) microprocessor, reduced instruction set computing (RISC) microprocessor, very long instruction word (VLIW) microprocessor, or a processor implementing other instruction sets or processors implementing a combination of instruction sets. The processing device 802 can also be one or more special-purpose processing devices such as an application specific integrated circuit (ASIC), a field programmable gate array (FPGA), a digital signal processor (DSP), network processor, or the like. The processing device 802 is configured to execute the processing logic 822 for performing the operations discussed herein (e.g., the operations of the task subsystem 113AN).

The computer system 800 can further include a network interface device 808. The computer system 800 also can include a video display unit 810 (e.g., a liquid crystal display (LCD) or a cathode ray tube (CRT)), an input device 812 (e.g., a keyboard, and alphanumeric keyboard, a motion sensing input device, touch screen), a cursor control device 814 (e.g., a mouse), and a signal generation device 818 (e.g., a speaker).

The data storage device 816 can include a non-transitory machine-readable storage medium 824 (sometimes referred to as a "computer-readable storage medium") on which is stored one or more sets of instructions 826 (e.g., the instructions to carry out one or more operations of the task subsystem 113A-N) embodying any one or more of the methodologies or functions described herein. The instructions can also reside, completely or at least partially, within the main memory 804 and/or within the processing device 802 during execution thereof by the computer system 800, the main memory 804 and the processing device 802 also constituting machine-readable storage media. The instructions can further be transmitted or received over the network 150 via the network interface device 808.

In one implementation, the instructions 826 include instructions for determining visual items for presentation in a user interface of a virtual meeting. While the computer-readable storage medium 824 (machine-readable storage medium) is shown in an exemplary implementation to be a single medium, the terms "computer-readable storage medium" and "machine-readable storage medium" should be taken to include a single medium or multiple media (e.g., a centralized or distributed database, and/or associated caches and servers) that store the one or more sets of instructions. The terms "computer-readable storage medium" and "machine-readable storage medium" shall also be taken to include any medium that is capable of storing, encoding or carrying a set of instructions for execution by the machine and that cause the machine to perform any one or more of the methodologies of the present disclosure. The terms "computer-readable storage medium" and "machine-readable storage medium" shall accordingly be taken to include, but not be limited to, solid-state memories, optical media, and magnetic media.

Reference throughout this specification to "one implementation," or "an implementation," means that a particular feature, structure, or characteristic described in connection with the implementation is included in at least one implementation. Thus, the appearances of the phrase "in one implementation," or "in an implementation," in various places throughout this specification can, but are not necessarily, referring to the same implementation, depending on the circumstances. Furthermore, the particular features, structures, or characteristics can be combined in any suitable manner in one or more implementations.

To the extent that the terms "includes," "including," "has," "contains," variants thereof, and other similar words are used in either the detailed description or the claims, these terms are intended to be inclusive in a manner similar to the term "comprising" as an open transition word without precluding any additional or other elements.

As used in this application, the terms "component," "module," "system," or the like are generally intended to refer to a computer-related entity, either hardware (e.g., a circuit), software, a combination of hardware and software, or an entity related to an operational machine with one or more specific functionalities. For example, a component can be, but is not limited to being, a process running on a processor (e.g., digital signal processor), a processor, an object, an executable, a thread of execution, a program, and/or a computer. By way of illustration, both an application running on a controller and the controller can be a component. One or more components can reside within a process and/or thread of execution and a component can be localized on one computer and/or distributed between two or more computers. Further, a "device" can come in the form of specially designed hardware; generalized hardware made specialized by the execution of software thereon that enables hardware to perform specific functions (e.g., generating interest points and/or descriptors); software on a computer readable medium; or a combination thereof.

The aforementioned systems, circuits, modules, and so on have been described with respect to interaction between several components and/or blocks. It can be appreciated that such systems, circuits, components, blocks, and so forth can include those components or specified sub-components, some of the specified components or sub-components, and/or additional components, and according to various permutations and combinations of the foregoing. Sub-components can also be implemented as components communicatively coupled to other components rather than included within parent components (hierarchical). Additionally, it should be noted that one or more components can be combined into a single component providing aggregate functionality or divided into several separate sub-components, and any one or more middle layers, such as a management layer, can be provided to communicatively couple to such sub-components in order to provide integrated functionality. Any components described herein can also interact with one or more other components not specifically described herein but known by those of skill in the art.

Moreover, the words "example" or "exemplary" are used herein to mean serving as an example, instance, or illustration. Any aspect or design described herein as "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

Finally, implementations described herein include collection of data describing a user and/or activities of a user. In one implementation, such data is only collected upon the user providing consent to the collection of this data. In some implementations, a user is prompted to explicitly allow data collection. Further, the user can opt-in or opt-out of participating in such data collection activities. In one implementation, the collected data is anonymized prior to performing any analysis to obtain any statistical patterns so that the identity of the user cannot be determined from the collected data.

## Claims

1. A method, comprising:
receiving, at a first client device of a first participant of a plurality of participants of a virtual meeting, a request to perform a task pertaining to the virtual meeting from a second client device of a second participant of the plurality of participants, wherein the request is received during the virtual meeting;
obtaining, at the first client device, first text data based on first audio data associated with a first audio stream produced by the second client device;
performing, using an artificial intelligence (AI) model of the first client device and using the first text data as input to the AI model, the task pertaining to the virtual meeting; and
providing, by the first client device, information associated with the performed task pertaining to the virtual meeting to the second client device.

2. The method of claim 1, wherein obtaining, at the first client device, the first text data based on the first audio data comprises:
receiving, at the first client device, the first audio data from the second client device; and
generating, using a speech-to-text AI model of the first client device and using the first audio data as input to the speech-to-text AI model, the first text data.

3. The method of claim 1, wherein obtaining, at the first client device, the first text data based on the first audio data comprises receiving, at the first client device, the first text data generated by the second client device.

4. The method of any preceding claim, wherein:
the method further comprises:
obtaining, at the first client device, the first audio data, and
generating, using the AI model and using the first audio data as input to the AI model, an output indicating an emotion pertaining to the first audio data; and
performing the task pertaining to the virtual meeting further comprises using the output indicating the emotion pertaining to the first audio data as further input to the AI model.

5. The method of any preceding claim, wherein the AI model comprises a generative AI model, and optionally wherein the task pertaining to the virtual meeting comprises generation of at least one of:
a transcript of the virtual meeting;
one or more captions of a discussion during the virtual meeting;
a summary of the virtual meeting; or
one or more notes based on the discussion during the virtual meeting.

6. The method of any of claims 1 to 3, wherein the task pertaining to the virtual meeting comprises identification of an action item discussed during the virtual meeting.

7. The method of any preceding claim, wherein each of the first client device and the second client device comprise a personal computing device of the respective first participant and second participant.

8. A method, comprising:
receiving, at a first client device of a first participant of a plurality of participants of a virtual meeting, a request of the first participant to perform a task pertaining to the virtual meeting, wherein the request is received during the virtual meeting;
determining, by the first client device, that performance of the task pertaining to the virtual meeting is to be delegated to a second client device of a second participant of the plurality of participants, wherein the performance of the task pertaining to the virtual meeting comprises use of an artificial intelligence (AI) model;
sending, by the first client device, an instruction to perform the task pertaining to the virtual meeting to the second client device;
receiving, by the first client device, information associated with the performed task pertaining to the virtual meeting from the second client device; and
presenting the information associated with the performed task during the virtual meeting.

9. The method of claim 8, wherein determining that performance of the task pertaining to the virtual meeting is to be delegated to the second client device comprises determining, at the first client device, that the first client device does not meet a client device criterion, and optionally wherein:
the client device criterion comprises the first client device meeting a predetermined computing resources specification, or
the client device criterion comprises the first client device including a generative AI model usable to perform the task pertaining to the virtual meeting.

10. The method of either of claims 8 and 9, further comprising:
obtaining, at the first client device, first audio data associated with a first audio stream produced by the first client device;
generating, using a speech-to-text AI model of the first client device and using the first audio data as input to the speech-to-text AI model, first text data; and
including the first text data with the instruction to perform the task pertaining to the virtual meeting, wherein the performance of the task pertaining to the virtual meeting comprises the AI model using the first text data as input, and optionally wherein the method further comprises training the speech-to-text AI model on training data based on speech of the first participant.

11. A method, comprising:
receiving, at a first client device of a first participant of a plurality of participants of a virtual meeting, a request to perform a task pertaining to the virtual meeting from a second client device of a second participant of the plurality of participants, wherein the request is received during the virtual meeting;
determining, at the first client device, that performance of the task pertaining to the virtual meeting is to be delegated to a third client device of a third participant of the plurality of participants, wherein the performance of the task pertaining to the virtual meeting comprises use of an artificial intelligence (AI) model;
providing, by the first client device, a second request to perform the task pertaining to the virtual meeting to the third client device; and
causing the second client device to receive information associated with performance, by the third client device, of the task pertaining to the virtual meeting.

12. The method of claim 11, wherein determining that performance of the task pertaining to the virtual meeting is to be delegated to the third client device comprises determining, at the first client device, that the third client device meets a client device criterion.

13. The method of claim 12, wherein the client device criterion comprises the third client device including a generative AI model usable to perform the task pertaining to the virtual meeting.

14. The method of claim 12, wherein:
the client device criterion comprises the third client device meeting a predetermined computing resources specification; or
the first client device monitors, for a plurality of client devices that include the first, second, and third client devices, a workload metric indicating a workload for a respective client device of the plurality of client devices, and the client device criterion comprises the workload metric for the third client device being below a threshold workload amount.

15. The method of any of claims 11 to 14, wherein the task pertaining to the virtual meeting comprises generation of at least one of:
a transcript of the virtual meeting;
one or more captions of a discussion during the virtual meeting;
a summary of the virtual meeting; or
one or more notes based on the discussion during the virtual meeting.
